Europäisches Patentamt

European Patent Office

Office européen des brevets

(11) Veröffentlichungsnummer: **0 001 583**
**B1**

(12) **EUROPÄISCHE PATENTSCHRIFT**

(21) Anmeldenummer: **78101044.2**

(22) Anmeldetag: **30.09.78**

(51) Int. Cl.³: **G 03 B  17/26,**
**B 65 H  19,28,**
**B 65 H  75/28,  G 11 B  23/10**

(54) Aussenhakenspule zum Aufwickeln bandförmiger Materialien

(30) Priorität: **13.10.77 DE 2745981**

(43) Veröffentlichungstag der Anmeldung:
**02.05.79 Patentblatt 79/09**

(45) Bekanntmachung des Hinweises auf die Patenterteilung:
**20.08.80 Patentblatt 80/17**

(84) Benannte Vertragsstaaten:
**BE CH DE FR GB**

(56) Entgegenhaltungen:
**BE - A - 566 676**
**DE - A - 2 444 106**
**DE - B - 1 272 707**
**DE - C - 1 002 617**
**DE - C - 1 058 363**
**US - A - 3 361 380**

(73) Patentinhaber: **Agfa-Gevaert Aktiengesellschaft**
**Patentabteilung**
**D - 5090 Leverkusen 1 (DE)**

(72) Erfinder: **Kluczynski, Achim**
**Im Eichholz 6**
**D - 5063 Overath (DE)**
**Altmann, Erik**
**Duesterweg 38**
**D - 4330 Muehlheim**
**Ruhr (DE)**

Courier Press, Leamington Spa, England.

Außenhakenspule zum Aufwickeln bandförmiger Materialien

Die Erfindung betrifft eine Außenhakenspule mit einem zylindrischen Spulenkern, der einen Kerndurchbruch enthält, an welchem Haken angeformt sind, und der vorzugsweise mit zwei Flanschenscheiben versehen ist, für das Aufwickeln von bandförmigen elastischen Materialien, insbesondere Filmmaterialien, welche ihrerseits zum Einhaken in die Spulenhaken mit entsprechend geformten Einhaklöchern versehen sind.

Es ist eine große Zahl von Spulenausführungsarten bekannt, die zum Aufwickeln verschiedenartiger Bandmaterialien dienen. Bei diesen Spulen ist das Befestigen des Filmbandes an den Spulen zum Aufwickeln auf die verschiedensten Arten gelöst, wie z.B. durch Umschlingen, Ankleben, Nieten, Klemmen oder Einhaken am oder in einem Schlitz in Spulenkern. Der Gegenstand der Erfindung befaßt sich mit Hakenspulen, in die das mit Löchern versehene Filmband eingehakt wird.

Für Kleinbildfilme sind Spulen bekannt, die z.B. als Doppelhakenspulen bezeichnet werden. . Diese Spulen besitzen im Spulenkem einen Kemdurchbruch, in dem eingeformte Fanghaken und separate Leitflächen oder Haltekörper und gebracht sind. Das mit einem Loch versehene Filmende wird in diesen Kerndurchbruch eingeschoben, wobei die Leitflächen zu beiden Seiten der Haken den Film um den Haken wölben, solange, bis das Loch im Film in den Haken einschnappt. Die Leitflächen verhindern nach dem Einschnappen des Loches in den Haken über die Filmsteifigkeit ein selbsttätiges Aushaken des Filmbandes aus der Spule.

Diese aus der Druckschrift BE—A 566676 bekannte Spulenform hat den Nachteil, daß beim automatischen Einhakvorgang die Spule in eine bestimmte Position gebracht werden und hier solange verharren muß, bis der Einhakvorgang abgeschlossen ist. Dies kostet natürlich Zeit und steht damit einer noch wirtschaftlichern Nutzung entgegen. Desweiteren ist an diesen Spulen nachteilig, daß sich nur relativ geringe Zugkräfte bei Filmbandmaterialien übertragen lassen, was in vielen Fällen zur Folge hat, daß der Film aus der Spule ausreißt und damit unbrauchbar wird.

Die US-Patentschrift 3 361 380 beschreibt eine Kombination Spule-Filmband, bei welcher in einem Spulenschlitz zwei Haken und im Filmband zwei Löcher zur Verbesserung der Haltekraft angebracht werden. Auch diese Spule eignet sich nur bedingt zum sicheren Befestigen des Filmes an der Spule und gestattet kein rotatives Anwickeln.

Die DT—OS 2 444 106 beschreibt eine Spule mit einem Aussenhaken, der den Film in Rotation einhaken und über Leitflächen beidseitig des Hakens gegen Aushaken sichern soll.

Diese Spule zeigt ein unsicheres Einhaken und führt daher zu hohem Ausschuß beim Einsatz in der Herstellung von Filmpatronen mit Spulen. Die als Aushaksicherung vorgesehenen Leitflächen vermeiden ein Aushaken des Films aus der Spule nur unzureichend. Die übertragbaren Zugkräfte sind ähnlich denjenigen normaler Hakenspulen und nicht zufriedenstellend.

Der Erfindung liegt die Aufgabe zugrunde, eine Spule zu finden, die ein rationelles rotatives Einhaken des Filmes in die Spule ermöglicht, eine gute sichere Haltekraft verbürgt und nach dem Einhaken auch ein Wickeln gegen die normale Wickelrichtung mit sicherer Verhakung und guter Haltefestigkeit ermöglicht.

Diese Aufgabe wurde erfindungsgemäß dadurch gelöst, daß an dem Kerndurchbruch der Spule ein oder mehrere Fanghaken mit Gegenhaken und ein oder mehrere sich gegenüberliegende Haltekörperpaare für das Einhaken des· bandförmigen mit Löchern versehenen Materials bei rotierender Spule so angeformt sind, daß bei Änderung der Wickelrichtung der Spule nach dem Einhakvorgang das bandförmige Material durch die Stirnflächen des oder der Gegenhaken und des einen der beiden Haltekörper jedes Haltekörperpaares mitgenommen wird.

Die Formung des Fanghakens mit einem in Richtung Spulenkernachse zeigenden angeformten Gegenhaken zeigt überraschenderweise eine sichere Verbindung, wenn der Haken das Filmloch gefangen hat, was auch bei Rotation der Spule stattfinden kann. Die Fanghakenwurzel und die Haltekörperwurzeln dienen bei normaler Wickelrichtung gemeinsam zur Übertragung der Zugkräfte zwischen Band und Spule.

Diese Ausführungsform der Spule mit auf einer Seite liegendem Fanghaken und Haltekörpern, einem dazwischen liegenden Durchbruch in dem Spulenkern und auf der anderen Seite liegenden Gegenhaken und Gegenhaltekörpern erlaubt es die Drehrichtung der Spule zu ändern, wobei das bandförmige Material stets fest eingehakt mit der Spule verbunden bleibt.

Weiterhin wurde gefunden, daß es zweckmäßig ist, um keine Abdrücke oder Durchdrücke auf dem Band zu erhalten, daß Fanghaken und Haltekörper innerhalb des Spulenkernumfanges liegen und das Band beim Aufwickeln nur von den flanschnahen zylindrischen Teilen des Spulenkerns getragen wird.

Eine weitere Ausgestaltung der Erfindung besteht darin, daß die Höhe und der gegenseitige Abstand der neben oder zwischen den Fanghaken angeordneten Haltekörperpaare so gewählt werden, daß ein einwandfreies Hineinrutschen des Endes des bandförmigen Materials in den Schlitz gewährleistet ist.

Eine weitere erhebliche Sicherung gegen ein eventuelles Aushaken wird dadurch erreicht, daß in den Kerndurchbruch hineinragende Leitflächen angeformt werden, und daß diese nur so weit in den Kerndurchbruch hineinragen, daß das Bandmaterial in ihn einfallen kann.

Eine weitere Verbesserung wird dadurch erreicht, daß die Leitflächen höher liegen als die in Richtung Kernachse zeigende unterste Spitze des Gegenhakens am Fanghaken.

Die besondere Ausgestaltung des Spulenkerns mit Durchbruch, Fanghaken, Gegenhaken und Haltekörpern erfült die gestellte Aufgabe und hat erhebliche Vorteile gegenüber den bekannten Spulen. Der Fanghaken, der entsprechend freigestellt ist, gestattet ein sicheres Einhaken des ihm zugeführten Filmbandes in Rotation. Die Rotationsbewegung der Spule während des Einhakvorganges kann dabei mit der gleichen Geschwindigkeit erfolgen wie die vorgegebene Wickelgeschwindigkeit. Zur Absicherung der beim rotativen Einhaken auftretenden plötzlichen Zugkraftspitzen und gegen Abreißen des Films von der Spule nach der Belichtung des Films in der Kamera, dient der in gleichem Abstand zur Spulenachse wie der Fanghaken liegende Haltekörper an der Fanghakenwand des Spulenkerns. Die mit dieser Kombination Fanghaken/Haltekörper übertragbaren Zugkräfte liegen erheblich höher als die der bekannten Spulen. Ein weiterer Vorteil der neuen Spule liegt in der durch Gegenhaken und mindestens einen weiteren Haltekörper gebildeten Aushaksicherung. Mit dieser speziellen Anordnung ist es möglich, in etwa die gleichen Zugkräfte in entgegengesetzter Wickelrichtung zu übertragen wie in "normaler" Wickelrichtung.

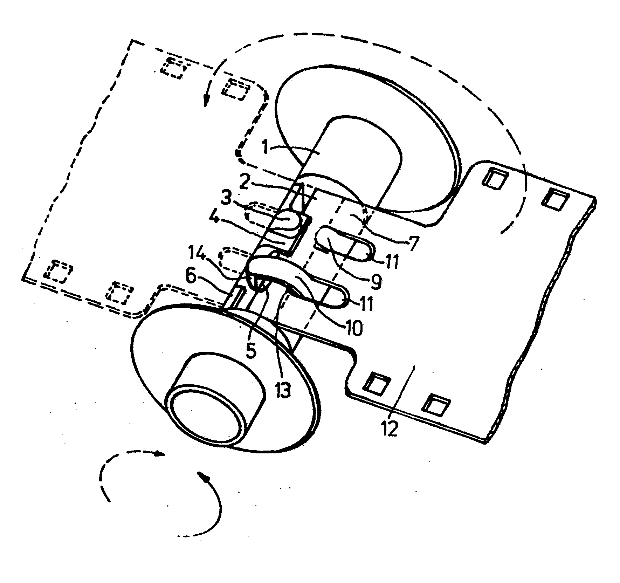

Ein Ausführungsbeispiel ist in der Zeichnung dargestellt und wird im folgenden näher beschrieben.

Die dargestellte Spule hat einen Spulenkern 1 mit einem Kerndurchbruch 2, an dem der Fanghaken 10 mit Gegenhaken 5 und beispielsweise zwei Haltekörper 3 und 9 angeordnet sind. Der Fanghaken 10 ist dabei so ausgebildet, daß er mit seiner Außenfläche genau der Krümmung des Spulenkerns folgt. Neben dem Fanghaken ist ein Haltekörper 9 an der gleichen Wand des Spulenkerns angeordnet, der aber nur eine bestimmte Höhe hat. Diese Höhe ist so bemessen, daß der Freiraum zwischen den Haltekörpern 3 und 9 ein Hineinrutschen des Films unter die als Aushaksicherung dienenden Leitflächen 4 und 6 gestattet. Der Film 12 wird dem Spulenkern so zugeführt, daß der Fanghaken 10, dessen untere einen größeren Abstand von der Spulenachse hat als die Leitfläche 6, in ein Loch 11 des Films 12 eingreifen kann und der Film sich dabei auf die Schulter 7 der Fanghakenwand legt. Kurz vor Auflage des Films 12 auf die Schulter 7 legt sich das zweite Filmloch 11 über den Haltekörper 9 und verstärkt damit die Haltekraft des Fanghakens 10 auf etwa den dopellten Wert. Hat der Film 12 seine Endlage auf der Schulter 7 eingenommen, ist zugleich das Filmende unter die Leitflächen 4 und 6 gesprungen und verhindert so ein selbsttätiges Aushaken des Films 12 aus der Spule 1.

In verschiedenen Kameras ist es möglich, den belichteten Film entgegen der vorgeschriebenen Rückwickelrichtung aufzuspulen. Um hier ein Aushaken des Films zu vermeiden, ist es notwendig, eine weitere Verhakung in Gegendrehrichtung anzubringen. Diesen Zweck erfüllen der an der Spitze des Fanghakens 10 angebrachte Gegenhaken 5 und der auf einer Leitfläche 4 sitzende Haltekörper 3. Nimmt der Film 12 die entgegengesetzte Lage (siehe gestrichelte Ansicht) ein, erfolgt die Verhakung des Films 12 am Gegenhaken 5 und Haltekörper 3 so, daß in etwa die gleichen Kräfte übertragen werden können wie in der vorgeschriebenen Wickelrichtung. Bei diesem "Umschlagen" des Films 12 in die andere Wickelrichtung, sind die gleichen Löcher 11 im Film wirksam wie in der vorgeschriebenen Wickelrichtung. Die zusammenwirkenden Halteflächen der Haltekörper und die des Fanghakens liegen in gleicher Höhe parallel zur Spulenachse für die jeweilige Wickelrichtung.

Beim Wickeln von hochempfindlichen Bändern, zum Beispiel Filmen, auf Spulen würden über den Umfang der Spulenachse vorstehende Teile den Film durch Druckvorbelichtung unbrauchbar machen. Daher sind Fanghaken 10 und Haltekörper 3, 9 so angeformt, daß diese innerhalb der Kontur der an den Flanschenscheiben verbleibenden Aufspulflächen der Spulenachse verbleiben und diese den aufgewickelten Film tragen.

**Patentansprüche**

1. Außenhakenspule mit einem zylindrischen Spulenkern (1), der einen Kerndurchbruch (2) enthält, an welchem Haken angeformt sind, und der mit vorzugsweise zwei Flanschenscheiben versehen ist, für das Aufwickeln von bandförmigen, elastischen Materialien (12) insbesondere Filmmaterialien, welche ihrerseits zum Einhaken in die Spulenhaken mit entsprechend geformten Einhaklöchern (11) versehen sind, dadurch gekennzeichnet, daß an dem Kerndurchbruch (2) ein oder mehrere Fanghaken (10) mit Gegenhaken (5) und ein oder mehrere sich gegenüberliegende Haltekörperpaare (3,9) für das Einhaken des bandförmigen mit Löchern (11) versehenen Materials (12) bei rotierender Spule so angeformt sind, daß, bei Änderung der Wickelrichtung der Spule nach dem Einhakvorgang, das bandförmige Material (12) durch die Stirnflächen (14) des oder der Gegenhaken (5) und des einen (3) der beiden Haltekörper (3,9) jedes Haltekörperpaares mitgenommen wird.

2. Außenhakenspule nach Anspruch 1, dadurch gekennzeichnet, daß der Fanghaken (10) mit Gegenhaken (5) und die Haltekörper (3,9) innerhalb des Umfanges des Spulenkernes (1) liegen und das Band beim Aufwickeln nur von den flanschnahen zylindrischen Teilen des Spulenkernes getragen wird.

3. Außenhakenspule nach Anspruch 1 und 2, dadurch gekennzeichnet, daß die Höhe und der gegenseitige Abstand der neben oder zwischen den Fanghaken (10) angeordneten Haltekörperpaare (3,9) so gewählt werden, daß ein einwandfreies Hineinrutschen des Endes des bandförmigen Materials (12) in den Kerndurchbruch (2) gewährleistet ist.

4. Außenhakenspule nach Anspruch 1 bis 3, dadurch gekennzeichnet, daß in den Kerndurchbruch (2) hineinragende Leitflächen (4,6) angeformt sind, die ein selbsttätiges Aushaken des Bandmaterials (12) verhindern, und daß diese nur so weit in den Kerndurchbruch (2) hineinragen, daß das Bandmaterial (12) in ihn einfallen kann.

5. Außenhakenspule nach Anspruch 1—4, dadurch gekennzeichnet, daß die Leitflächen (3,6) höher liegen als die in Richtung Kernachse unterste Spitze des Gegenhakens (5) am Fanghaken (10).

## Claims

1. A spool with external hooks with a cylindrical spool core (1), which contains a core opening (2), in which hooks are formed, and which is preferably provided with two flange discs, for winding elastic materials in the form of tape (12), in particular, film, the film itself having perforations (11) appropriately shaped for their attachment to the hooks in the spool, characterised in that one or more catch hooks (10) with counter hooks (5) and one or more pairs of opposite retaining elements (3,9) are formed in the said core opening (2) for the purpose of hooking the tape (12), which has apertures (11) therein, on to the spool while it is in rotation, in such a manner that if the direction of winding of the spool is reversed after the tape has been hooked into position the tape (12) is carried along by the facing surfaces (14) of the counter hook(s) (5) and of one (3) of the two retaining elements (3,9) of each pair of retaining elements.

2. A spool with external hooks, according to claim 1, characterised in that the catch hook (10) with the counter hook (5) and the retaining elements (3,9) are situated within the circumference of the spool core (1) and during winding the tape is carried only by the cylindrical parts of the spool core adjacent to the flanges.

3. A spool with external hooks according to claims 1 and 2, characterised in that the height of and the space between the pairs of retaining elements (3,9) situated adjacent to or between the catch hooks (10) are chosen so that the end of the tape (12) is able to slip perfectly into the core opening (2).

4. A spool with external hooks according to claims 1 to 3, characterised in that guide surfaces (4,6) are formed to extend into the core opening (2) which prevent the tape (12) from unhooking itself and in that these guide surfaces extend into the core opening (2) only as far as to allow the tape (12) to slip into the opening.

5. A spool with external hooks according to claims 1 to 4, characterised in that the guiding surfaces (3,9) are higher than the lowest tip of the counter hook (5) on the catch hook (10), which tip points in the direction of the axis of the spool core.

## Revendications

1. Bobine à crochets extérieurs avec un noyau cylindrique qui contient une découpe près de laquelle on a réalisé des crochets, et qui est muni de préférence de deux joues, pour l'en-roulement de matériaux élastiques en forme de bandes, notamment de matériaux à pellicules qui sont munis pour leur part de trous de forme appropriée pour l'accrochage aux crochets des bobines, caractérisée en ce qu'on a réalisé près de la découpe de la bobine un ou plusieurs crochets avec contre-crochets et une ou plusieurs paires de languettes de maintien en regard pour l'accrochage du matériau muni de trous en faisant tourner la bobine, de sorte que, si on modifie le sens d'enroulement de la bobine après la phase d'accrochage, le matériau en bandes est entraîné par les surfaces frontales du ou des contrecrochets et de l'une des deux pièces de chaque paire de languettes de maintien.

2. Bobine selon la revendication 1, caractérisée en ce que le crochet avec contre-crochet et la languette de maintien se trouvent à l'intérieur du pourtour du noyau de la bobine et en ce que la bande, au cours de l'enroulement, n'est portée que par les parties cylindriques de noyau au voisinage des joues.

3. Bobine selon l'une quelconque des revendications 1 ou 2, caractérisée en ce que la hauteur et la distance mutuelle des paires de languettes placées près du crochet ou entre les crochets sont choisies de façon à assurer une pénétration parfaite par glissement de l'extrémité du matériau en forme de bande dans la découpe du noyau.

4. Bobine selon l'une quelconque des revendications 1 à 3, caractérisée en ce qu'on a réalisé des surfaces de guidage pénétrant à l'intérieur de la découpe et empêchant un décrochage automatique du matériau en bande, et en ce que ces surfaces pénètrent dans la découpe d'une quantité telle que le matériau en bande puisse tomber dans ladite découpe.

5. Bobine selon l'une quelconque des revendications 1 à 4, caractérisée en ce que les surfaces de guidage sont placées plus haut que la pointe la plus basse, dans le sens de l'axe du noyau, du contre-crochet sur le crochet.